# EUROPEAN PATENT SPECIFICATION

(11) **EP 4 441 864 B1**
(45) Date of publication and mention of the grant of the patent: **31.12.2025**
(21) Application number: 22847293.2
(22) Date of filing: 29.11.2022
(51) Int. Cl.: H02J 7/00

(54) **MANAGING CHARGING STATIONS BASED ON USAGE DATA**
VERWALTUNG VON LADESTATIONEN AUF BASIS VON NUTZUNGSDATEN
GESTION DE STATIONS DE CHARGE BASÉE SUR DES DONNÉES D'UTILISATION

(30) Priority: 30.11.2021 US 202163284548 P
(43) Date of publication of application: 09.10.2024
(73) Proprietor: Tesla, Inc., Austin, TX 78725 (US)
(72) Inventor: POTTHAST, James, Austin, TX 78725 (US)
(74) Representative: Zacco Sweden AB
(86) International application number: PCT/US2022/051267
(87) International publication number: WO 2023/101976

(56) References cited:
- US-A1- 2015 226 566
- US-A1- 2016 075 247
- US-A1- 2018 281 612
- US-A1- 2021 213 844

## Description

### BACKGROUND

Generally described, computing devices and communication networks can be utilized to exchange data and/or information. In a common application, a computing device can request content from another computing device via the communication network. For example, a user at a personal computing device can utilize a browser application to request a content page (e.g., a network page, a Web page, etc.) from a server computing device via the network (e.g., the Internet). In such embodiments, the user computing device can be referred to as a client computing device and the server computing device can be referred to as a content provider. In another embodiment, the user computing device can collect or generate information and provide the collected information to a server computing device for further processing or analysis.

Generally described, infrastructure for utilization by a variety of vehicles, such as electric vehicles, combustion engine vehicles, hybrid vehicles, etc., can be configured in various geographic areas. In certain scenarios, a service provider may provide vehicle infrastructure equipment, such as power charging stations, for utilization by vehicle users. Such vehicle infrastructure equipment can be deployed in various geographic charging station sites in which individual geographic charging station sites can include a plurality of charging stations. Some individual charging stations can include self-test or self-assessment functionality that can determine the operability of the electronic components of the charging stations.

US 2015/226566 A1 discloses systems and methods for identifying available charging stations (e.g., charging stations available to be used by an electric vehicle) and/or determining travel routes for electric vehicles. In some embodiments, the systems and methods receive a request to find an available charging station, determine a state of charge for an electric vehicle associated with the request, identifies one or more available charging stations located within a suitable distance to the electric vehicle, the suitable distance based on the determined state of the charge for the electric vehicle, and present information to the electric vehicle, or an associated mobile device, that indicates the identified charging stations.

US2018/281612A1 discloses a system for managing charging stations. The invention is defined in the claims.

### BRIEF DESCRIPTION OF THE DRAWINGS

This disclosure is described herein with reference to drawings of certain embodiments, which are intended to illustrate, but not to limit, the present disclosure. It is to be understood that the accompanying drawings, which are incorporated in and constitute a part of this specification, are for the purpose of illustrating concepts disclosed herein and may not be to scale.
FIG. 1 depicts a block diagram of an illustrative environment for providing charging station management with a network service in accordance with one or more aspects of the present application;
FIG. 2A illustrates an environment that corresponds to a charging station site in accordance with one or more aspects of the present application;
FIG. 2B depicts an environment that corresponds to vehicle in accordance with one or more aspects of the present application;
FIG. 3 depicts an illustrative architecture for implementing a charging station data service in accordance with aspects of the present application;
FIG. 4A is a block diagram of an illustrative environment of interactions between the network service and charging stations according to an embodiment;
FIG. 4B is a block diagram of an illustrative environment of interaction between the network service and charging stations for processing collected charging station data according to an embodiment;
FIG. 5 is flow diagram of an illustrative process implemented by the charging station data service to process time series data to generate characterizations of unavailability according to one or more embodiments as disclosed herein; and
FIG. 6 is an example illustration of time series data characterizing charging station use as "use" or "non-use" over a set of time intervals.

### DETAILED DESCRIPTION

The following detailed description of certain embodiments presents various descriptions of specific embodiments. However, the innovations described herein can be embodied in a multitude of different ways, for example, as defined and covered by the claims. This description makes reference to the drawings where reference numerals can indicate identical or functionally similar elements. It will be understood that elements illustrated in the figures are not necessarily drawn to scale. Moreover, it will be understood that certain embodiments can include more elements than illustrated in a drawing and/or a subset of the illustrated elements. Further, some embodiments can incorporate any suitable combination of features from two or more drawings.

Generally described, one or more aspects of the present disclosure relate to the configuration and management of infrastructure equipment based on usage data. By way of illustrative example, aspects of the present application correspond to the management of vehicle charging station operational status based on correlated use data of charging stations. Illustratively, the correlated use data is processed as time series data of usage for operational charging stations (e.g., no self-determined error) based on a defined time window. Individual time intervals may be characterized as the use of the charging station or non-use of the charging station. Consecutive time intervals of non-use can be identified and compared to defined thresholds of non-use associated with charging stations that are operational and available for use. If an individual time interval of non-use exceeds a threshold, the individual unit may be considered operational but not available for service. A system can then generate notifications and generate instructions for mitigation or correctional actions.

Generally described, charging stations may be considered operational based on different forms of self-tests or diagnostic processes. Such self-test or diagnostic processes are primarily focused on whether the components of the charging station are capable of providing power to a connected vehicle. For example, a self-test or diagnostic module may be capable of determining whether any software modules on a charging station have experienced a fault or otherwise not executable by processors within the charging station. In another example, a self-test or diagnostic module may be capable to determining whether there is any detectable any physical damage to the components of a charging station that would prevent charging operations from occurring (e.g., a broken connector).

Self-test or diagnostic processes are generally limited to characterization of an operational status of the charging station (e.g., electrical, software or mechanical operational functionality). In certain scenarios, however, environment conditions or other external influences may impact the availability of an otherwise operational charging station. For example, an obstacle may be placed proximate to a charging station that may limit a vehicle user from using the charging station. In another example, debris, such as dirt, snow, etc. may be accumulated over portions of a charging station site such that at least a portion of otherwise operational charging stations are no longer available. In still a further example, an operational charging station may be defaced or vandalized such that a vehicle user may choose not to utilize the charging station. In yet another example, an operational charging station may be implemented within a location (e.g., a portion of a parking lot) such that it may not be visible to users or otherwise not selected for use due to its location. In all these examples, and additional examples not explicitly disclosed, traditional self-test or diagnostic processes would not be able to identify or diagnose that the operational charging station is not available or otherwise not being utilized relative to other charging stations for its intended use.

Still further, in other applications, specific self-test or diagnostic processes may not be configured to diagnose all possible potential operational status errors. For example, a charging station may be configured with a limited function self-test/diagnostic operation that tests for the proper functioning of the electrical system but does not have the ability to identify potential problems with the interface, mechanical connectors, software execution, etc. For example, an individual charging station may be subject to vandalism that may result in damage to exterior portions of the charging station without damaging the function of the electrical system. Even further, other charging stations may experience a failure that disrupts the operation of the self-test or diagnostic functionality such that the charging station may be erroneously characterized as operational (e.g., a false negative). In all these examples, traditional self-test or diagnostic processes would not be able to identify or diagnose that the charging station is either not operational or not available for its intended use.

To address at least a portion of the above-described inefficiencies, a network service provider can facilitate the management of a plurality of charging stations utilizing collected usage data. The network service provider receives and maintains correlated charging station use data as time series data. The correlated charging station use data is considered for charging stations that are considered or characterized as operational (e.g., no self-determined or reported errors). The time series data corresponds to a defined time window in which individual time intervals may be characterized as use of the charging station or non-use of the charging station. Consecutive time intervals of non-use can be identified and compared to defined thresholds of non-use associated with charging stations that are characterized as operational and believed to be available for use. If an individual time interval of non-use exceeds a threshold, the individual unit may be considered operational but not available for service. More specifically, in an illustrative embodiment, the network service can determine whether any particular instance of sequential non-use corresponds to a statistically significant deviation of established periods of non-use for a charging station. If such a deviation occurs, the consecutive period of non-use can be considered to be indicative of the unavailability of the charging station. The network service can further compare whether other charging stations within a defined geographic charging station site have also experienced such a statistical deviation, which may be indictive of a greater source of unavailability on a charging station site basis.

The network service can then generate notifications and generate instructions for mitigation or correctional actions responsive to the determination and characterization of the unavailability of the charging station. For example, the network service can initiate additional or alternative diagnostic systems, vision systems or other detection processes to verify the identified unavailability. In other examples, the network service can schedule or cause to be scheduled in person service calls to diagnose or potentially repair charging stations. In other examples, the network service can generate interfaces or communications that identify the individual or grouped availability information for charging stations.

Although the various aspects will be described in accordance with illustrative embodiments and a combination of features, one skilled in the relevant art will appreciate that the examples and combination of features are illustrative in nature and should not be construed as limiting. More specifically, aspects of the present application may be applicable with various types of vehicle infrastructure equipment or service equipment. Accordingly, one skilled in the relevant art will appreciate that the aspects of the present application are not necessarily limited to application to any particular type of charging station or charging station altogether.

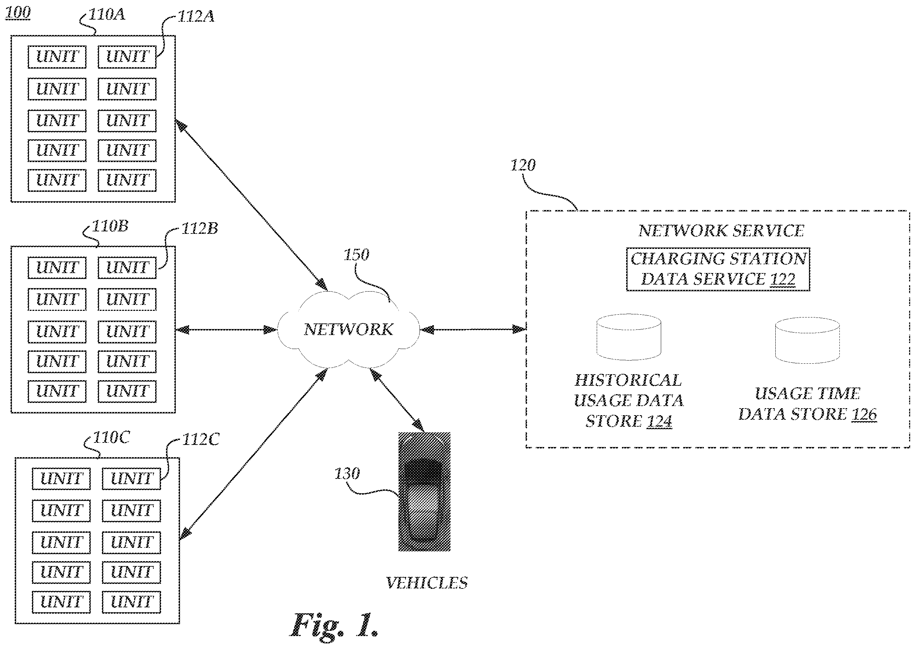

FIG. 1 depicts a block diagram of an embodiment of the system 100. The system 100 can include one or more charging station sites 110A, 110B, and 110C and a plurality of charging stations (e.g., units) 112A, 112B, and 112C for each charging station area, respectively. The plurality of charging stations 112A, 112B, and 112C can provide power to one or more vehicles. The plurality of charging stations 112A, 112B, and 112C are organized logically and physically according to charging station sites 110A, 110B, and 110C common to a subset of charging stations. The organizational criteria utilized to define the different charging station sites may be implemented such an individual charging station may corresponds to a single geographic charging station site. Alternatively, individual charging station sites may be defined with some overlap such that one or more individual charging stations may be logically grouped into more than one defined charging station site regardless that the individual charging stations have a fixed geographic location. Illustratively, individual charging stations 112A, 112B, and 112C can be characterized as in use or not in use based on whether the charging station is providing power to a vehicle. The charging station (or other proxy component) can then transmit the characterized use data to the network service.

The system 100 can also include a network 150, the network connecting the charging station sites 110A, 110B, and 110C, the network service 120, and/or vehicles 130. Illustratively, the various aspects associated with the charging station data service 122, historical usage data store 124, and usage time data store 126 in the network service 120 can be implemented as one or more components that are associated with one or more functions or services. Accordingly, the components of the network service 120 should be considered as a logical representation of the service.

One or more of the individual charging stations 112A, 112B, and 112C may also be associated with self-test or diagnostic modules that are capable of determining, at least partially, that one or more components of the individual charging stations 112A, 112B, and 112C are operational. As described above, individual charging stations 112A, 112B, and 112C that are determined to be non-operational based on self-test or diagnostic modules can be removed from further processing as discussed herein. Illustratively, the individual charging stations 112A, 112B, and 112C can include communication functionality, including hardware and software, that facilitate interaction via one of a plurality of communication mediums and communication protocols. Alternatively, the geographic charging station sites may include additional computing devices that function to communicate with individual charging stations 112A, 112B, and 112C via physical or short range wireless communications and then transmit charging station data via additional network connections, such as the network 150.

The network 150, as depicted in FIG. 1, enables data communication between the charging station sites 110A, 110B, and 110C, vehicles 130, and the network service 120. In some embodiments, the network 150 can be a wired communication network, such that the charging station sites 110A, 110B, and 110C, the network service 120, and/or vehicles 130 are connected via a wired communication using any one of the commercially available wired communication standards. In some embodiments, the network 150 is a wireless communication network. In these embodiments, the network 150 can use a short-range communication protocol, such as Bluetooth, Bluetooth low energy ("BLE"), and/or near field communications ("NFC"). The network 150 can comprise any combination of wired and/or wireless networks, such as one or more direct communication channels, local area network, wide area network, personal area network, and/or the Internet. In some embodiments, the network 150 may include one or more wireless networks, such as a Global System for Mobile Communications (GSM) network, a Code Division Multiple Access (CDMA) network, a Long Term Evolution (LTE) network, 5G communications, or any other type of wireless network. Network 150 can use protocols and components for communicating via the Internet or any of the other aforementioned types of networks. For example, the protocols used by the network 150 may include Hypertext Transfer Protocol (HTTP), HTTP Secure (HTTPS), Message Queue Telemetry Transport (MQTT), Constrained Application Protocol (CoAP), and the like. Protocols and components for communicating via the Internet or any of the other aforementioned types of communication networks are well known to those skilled in the art and, thus, are not described in more detail herein. In some embodiments, wireless communication via the network 150 may be performed on one or more secured networks, such as communicating with encrypting data via SSL (e.g., 256-bit, military-grade encryption). The various communication protocols discussed herein are merely examples, and the present disclosure is not limited thereto.

The network service 120 illustratively corresponds to a one or more computing devices that are operable to host a charging state data service that can facilitate the processing of time series data corresponding to reported (or non-reported) use data as described herein. The network service 120 can further include one or more data store, such as the historical usage data store 124, for maintaining historical usage data that will be utilized to determine statistical deviations as described herein. The network service can further include a usage time data store 126 that can store the time series data as described herein. The network service 120 is represented in a simplified, logical form and does not reflect all of the physical software and hardware components that may be implemented to provide the functionality associated with the network based service.

The vehicles 130 illustratively can receive an availability of the individual charging stations 112A, 112B, and 112C associated with the charging station sites 110A, 110B, and 110C, respectively. For example, the vehicles 130 may access to the network service 120 to determine an available charging stations. The vehicles 130 may able to provide one or more charging station sites 110A, 110B, and 110C that are available based at least on the processed charging stations data located for each charging station sites 110A, 110B, and 110C.

The charging station sites 110A, 110B, and 110C, charging stations 112A, 112B, and 112C, vehicles 130, and the network service 120 are merely illustrated for example purposes. The present application does not limited by the representation and/or number of the charging station sites 110A, 110B, and 110C, charging stations 112A, 112B, and 112C, vehicles 130, and the network service 120, as illustrated in FIG. 1.

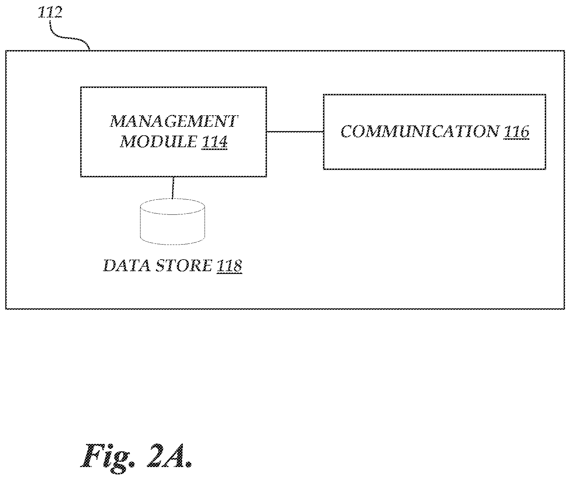

For purposes of illustration, FIG. 2A illustrates an environment that corresponds to each charging station 112 (e.g., unit) in accordance with one or more aspects of the present application. Individual charging station 112 illustratively include a management module 114, such as self-test or diagnostic modules. The management module 114 can be operable to implement one or more aspects of the present application as described herein. In one aspect, the management module 114 can generate time series data.

In one aspect, the management module 114 can be configured to perform a characterization of at least use of the charging station for a defined period of time corresponding to individual time intervals in the time series data. For example, the management module 114 may estimate availability of the charge stations by collecting the use data that indicates instances of use of the charging station. These data can be stored in the data store 118. The management module 114 may communicate with the network service 120 and/or vehicles 130 via the communication 116.

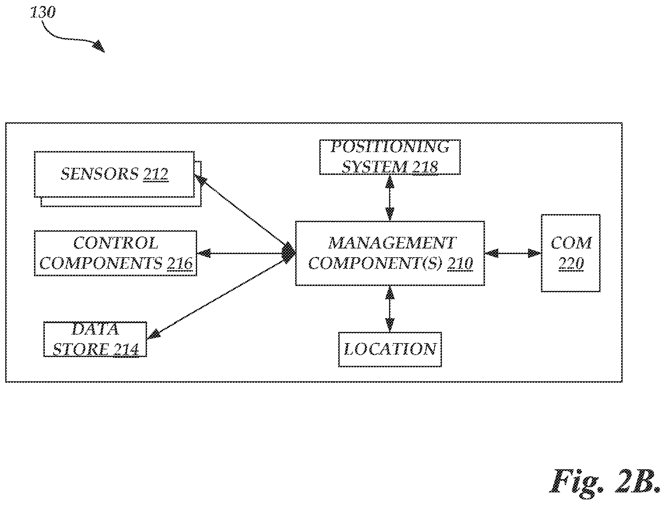

For purposes of illustration, FIG. 2B illustrates an environment that corresponds to vehicles 130 in accordance with one or more aspects of the present application. Individual vehicles illustratively include a management component 210 that is operable to implement one or more aspects of the present application as described herein.

The environment of the vehicle 130 can include sensors 212 that can provide inputs for the operation of the vehicle or collection of information as described herein. The collection of sensors 212 can include one or more sensor or sensor-based systems included with a vehicle or otherwise accessible by a vehicle during operation. The sensors 212 may be integrated into the vehicle. Alternatively, the sensors 212 may be provided by interfaces associated with a vehicle, such as physical connections, wireless connections, or a combination thereof.

In one aspect, the sensors 212 can include vision systems that provide inputs to the vehicle, such as detection of objects, attributes of detected objects (e.g., position, velocity, acceleration), presence of environment conditions (e.g., snow, rain, ice, fog, smoke, etc.), and the like. For example, the vehicle 130 may include a plurality of sensors 212 (including cameras, operational sensors, etc.), a management component 210, and data store 214. In this example, the sensors 212 may provide the vehicle operational parameters to the management component 210 in real time or near real time. The management component 210 may provide data related to controlling the vehicle, such as steering wheel direction, acceleration, braking, etc. The data store 214 may store information related to the current vehicle operational environment. In some embodiments, vehicles 130 can rely on such vision systems for defined vehicle operational functions without assistance from or in place of other traditional detection systems.

In yet another aspect, the sensors 212 can further include one or more positioning systems that can obtain reference information from external sources that allow for various levels of accuracy in determining positioning information for a vehicle. For example, positioning systems can include various hardware and software components for processing information from GPS sources, Wireless Local Area Networks (WLAN) access point information sources, Bluetooth information sources, radio-frequency identification (RFID) sources, and the like. In some embodiments, the positioning systems can obtain combinations of information from multiple sources. Illustratively, the positioning systems can obtain information from various input sources and determine positioning information for a vehicle, specific elevation at a current location. In other embodiments, the positioning systems can also determine travel-related operational parameters, such as the direction of travel, velocity, acceleration, and the like. The positioning system 218 may be configured as part of a vehicle for multiple purposes, including self-driving applications, enhanced driving or user-assisted navigation, and the like. Illustratively, the positioning systems can include processing components and data that facilitate the identification of various vehicle parameters or process information.

In still another aspect, the sensors 212 can include one or more navigations system for identifying navigation related information. Illustratively, the navigation systems can obtain positioning information from positioning systems and identify characteristics or information about the identified location, such as elevation, road grade, etc. The navigation systems can also identify suggested or intended lane locations in a multi-lane road based on directions that are being provided or anticipated for a vehicle user. Similar to the location systems, the navigation system may be configured as part of a vehicle for multiple purposes, including self-driving applications, enhanced driving or user-assisted navigation, and the like.

The environment can further include various additional sensor components or sensing systems operable to provide information regarding various operational parameters for use in accordance with one or more of the operational states. The environment can further include one or more control components 216 for processing outputs, such as the transmission of data through a communications output 220, the generation of data in memory, the transmission of outputs to other processing components, and the like.

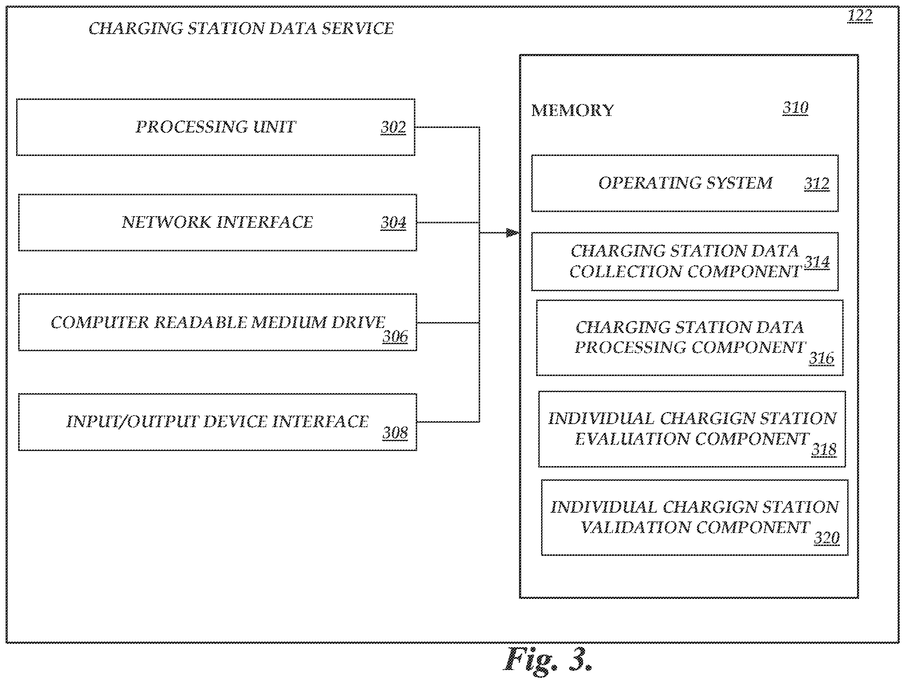

With reference now to FIG. 3, an illustrative architecture for implementing the charging station data service 122 on a network service 120 will be described. The charging station data service 122 may be part of components/systems that can provide functionality associated with charging station data processing. The charging station data service 122 may further configured to evaluate and validate individual charging station.

The architecture of FIG. 3 is illustrative in nature and should not be construed as requiring any specific hardware or software configuration for the charging station data service 122. The general architecture of the charging station data service 122 is depicted in FIG. 3 includes an arrangement of computer hardware and software components that may be used to implement aspects of the present disclosure. As illustrated, the charging station data service 122 can include a processing unit 302, a network interface 304, a computer readable medium drive 306, and an input/output device interface 308, all of which may communicate with one another by way of a communication bus. The components of the charging station data service 122 may be physical hardware components that can include one or more circuitries and software models.

The network interface 304 may provide connectivity to one or more networks or computing systems, such as the network 150 of FIG. 1. The processing unit 302 may thus receive information and instructions from other computing systems or services via a network. The processing unit 302 may also communicate to and from memory 310 and further provide output information via the input/output device interface. In some embodiments, the charging station data service 122 may include more (or fewer) components than those shown in FIG. 3.

The memory 310 may include computer program instructions that the processing unit 302 executes in order to implement one or more embodiments. The memory 310 generally includes RAM, ROM, or other persistent or non-transitory memory. The memory 310 may store an operating system 312 that provides computer program instructions for use by the processing unit 302 in the general administration and operation of the management component 210. The memory 310 may further include computer program instructions and other information for implementing aspects of the present disclosure.

The memory 310 may include a charging station data collection component 314. In some embodiments, the charging station data collection component 314 is configured to receive the charging station us data collected by individual charging stations. Illustratively, the charging station use data can correspond characterization of at least use of the charging station for a defined period of time corresponding to individual time intervals in the time series data or current time series data. For example, the individual time interval can correspond to a selection of fixed period of time, an estimated minimum amount of time that a vehicle would receive power, or some other selected set of time. The characterization of use can further include additional verification parameters, such as measure of power delivered to the vehicle, vision systems, sensors, etc. that can verify that can attempt verify that charging station is in use. Illustratively, the charging stations can collect use data that indicates instances of use of the charging station. The charging station may also characterize time intervals as "non-use" if the charging station does not register use or the verification parameters are not met. In other embodiments, the charging stations may not actively communicate any non-use events but rather the network service can infer that a lack of reported use of the charging station can be interpreted as non-use. Still further in some embodiments, the charging stations can be monitored for network connectivity so that any lack of reported use is not due to a failure or interruption of communication functionality. In these embodiments, the verification that alternative causes, such as network failures, are not attributable for lack of reported use can mitigate potential false positives. The individual charging stations and/or individual charging station site transmits the use data to network service.

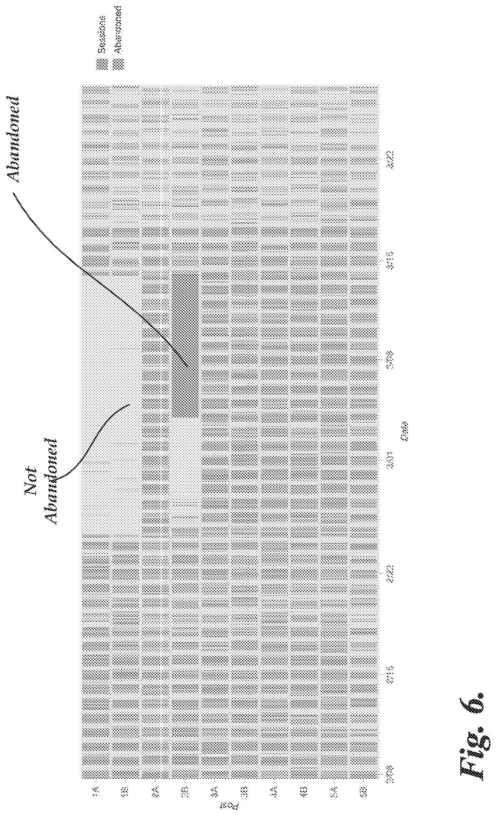

The memory 310 may include a charging station data processing component 316 configured to process the incoming charging station use data (e.g., collected by the charging station data collection component 314) and stores the charging station use data as time series data for a window. Illustratively, the processing of the use data can include the creation of the time series data. Additionally, the processing of the use data can include the updating of a previously processed time series data such that new charging data is added to the time series data and that the oldest previously collected time series data is removed. Illustratively, the time series data includes a fixed number of time intervals such that variations in use of operational and available charging stations may be considered as non-statistical variations. For example, in one embodiment, the time series data can be represented in terms of 50, 75, 100, 125, 150, 175, 200, etc. consecutive intervals. Additionally, the selected number of time intervals may be dynamically selected by the network service based on results of the processing of the time series data (e.g., potential false positive characterization of unavailability), time of day, season, or other external factors (e.g., periods of anticipated high usage). The time intervals can also vary between individual charging stations or sets of charging stations (an illustration of time series data characterizing charging station use as "use" or "non-use" over a set of time intervals is illustrated in FIG. 6).

The memory 310 may include an individual charging station evaluation component 318 by determining a trigger event for the individual charging station evaluation. The trigger event can correspond to time based criteria, such as based on scheduled times of day or periodicity. The trigger event can also correspond to defined events, such as power consumption metrics for a charging station site (e.g., geographic charging station site), manually generated requests (administrator or vehicle owners), requests received by the network service provider, and the like. Illustratively, the individual charging station evaluation component 318 can determine whether any particular instance (or individual charging station) of sequential non-use corresponds to a statistically significant deviation of established periods of non-use for a charging station. If such a deviation occurs, the consecutive period of non-use can be considered to be indicative of an unavailability of the charging station. The individual charging station evaluation component 318 can further compare whether other charging stations within a defined geographic charging station site have also experienced such a statistical deviation, which may indictive of a greater source of unavailability on a charging station site basis. Accordingly, the individual charging station evaluation component 318 can obtain historical session criteria for the charging station that corresponds to the selection of the statistical deviation amount that will be utilized to evaluation periods of identified non-use. Illustratively, in one aspect, the historical session criteria can include an identification of a fixed number or formula for setting the threshold amount.

In some embodiments, the formula is based on a percentile of the measured inactivity of the charging with the current time window. For example, the percentile can be any percentage value including, but not limited to, 75%, 80%, 85%, 90%, 95%, 99% and any percentage values in between. Additionally, in some embodiments, the formula can also include a multiplier of the percentage value, such as 2x, 3x, 4x, 5x, and the like. By identifying the threshold as a percentile of the current window of time series data, the threshold can be considered to be dynamic in nature to account for variations in use by season, weather, or other events that may create variations in use or non-use of operational charging stations. Additionally, in embodiments where a formula includes a multiplier, the multiplier assists in establishing a threshold that filters out possible positives. The formula can illustratively be modified by adjusting the percentile or the multiplier based on feedback, such as tuning the multiplier based on a number of false negatives (e.g., incorrect characterizations of availability).

In some embodiments, the individual charging station evaluation component 318 can obtain the current time series data window and identify periods of non-use within the time series data. The individual charging station evaluation component 318 can also process the time series data to determine whether any identified periods of non-use exceed the threshold (e.g., exceeds the percentile x multiplier threshold). If so, the individual charging station evaluation component 318 can characterize one or more periods of inactivity as indicative of unavailability of the charging station. If no identified periods of non-use exceed the threshold, the network service can characterize the charging station as operational and available (assuming there are no self-test or diagnostic reports of failure).

The memory 310 may also include an individual charging station validation component 320 to validate any characterizations of individual charging station unavailability. In one embodiment, the individual charging station validation component 320 can compare individual characterizations of charging station unavailability relative to other charging stations within a defined charging station site or set of charging station sites. Illustratively, the historical session criteria can also include a definition of the charging station site unavailability thresholds as a percentage of characterized unavailable charging stations relative to the total number of charging stations. For example, if the charging station site unavailability threshold is set to 60%, if the percentage of characterized unavailable charging stations relative to the total number of charging stations exceeds the threshold, the individual charging station validation component 320 can characterize the charging station site as having a significant event that may not be limited to an individual charging station or subset of charging stations. For example, a barrier to a geographic charging station site that prevents access to most (if not all) the charging stations could be identified. In other examples, this charging station site-level event may be used to identify or eliminate false positives in scenarios where usage is declining naturally due to external conditions such as increased availability of charging stations in the local region.

In some embodiments, if a charging station is characterized as unavailable and the unavailability characterization is validated, the individual charging station validation component 320 can then generate notifications, and generate instructions for mitigation or correctional actions responsive to the determination and characterization of unavailability of the charging station. For example, the individual charging station validation component 320 can initiate additional or alternative diagnostic systems, vision systems or other detection processes to verify the identified unavailability. In other examples, the individual charging station validation component 320 can schedule or cause to be scheduled in person service calls to diagnose or potentially repair charging stations. In other examples, the individual charging station validation component 320 can generate interfaces or communications that identifying individual or grouped availability information for charging stations.

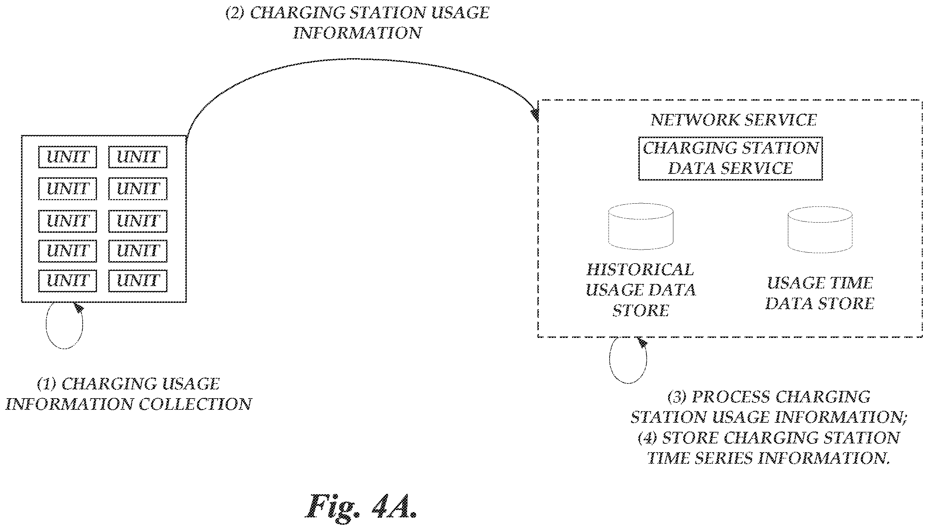

With reference now to FIGS. 4A-4B, an illustrative interaction between individual charging stations and the charging station data service 122 will be described. Although only a single interaction is illustrated, the present application is not limited to a single interaction. Rather, individual iterations of the illustrated interaction can result in different evaluations of the individual charging stations, sets of charging stations, one or more geographic charging station sites, etc.

FIG. 4A illustrates an initial collection of charging station use data and transmission of the charging station data to form or update the time series data. At (1), the charging stations can collect individual charging use data. Illustratively, the charging station use data can correspond to the characterization of at least the use of the charging station for a defined period of time corresponding to individual time intervals in the time series data. For example, the individual time interval can correspond to a selection of a fixed period of time, an estimated minimum amount of time that a vehicle would receive power, or some other selected set of times. The characterization of use can further include additional verification parameters, such as the measure of power delivered to the vehicle, vision systems, sensors, etc. that can verify that can attempt to verify that the charging station is in use. Illustratively, the charging stations can collect use data that indicates instances of use of the charging station. The charging station may also characterize time intervals as "non-use" if the charging station does not register use or the verification parameters are not met. In other embodiments, the charging stations may not actively communicate any non-use events but rather the charging station data service 122 can infer that a lack of reported use of the charging station can be interpreted as non-use. Still further, in some embodiments, the charging stations can be monitored for network connectivity so that any lack of reported use is not due to a failure or interruption of communication functionality. In these embodiments, the verification that alternative causes, such as network failures, are not attributable to lack of reported use can mitigate potential false positives. At (2), the individual charging stations, proxy component or management component transmits the use data to charging station data service 122.

At (3), the charging station data service 122 processes the incoming charging station use data and stores the charging station use data as time series data for a window. Illustratively, the processing of the use data can include the creation of the time series data. Additionally, the processing of the use data can include the updating of a previously processed time series data such that new charging data is added to the time series data and that the oldest previously collected time series data is removed. Illustratively, the time series data includes a fixed number of time intervals such that variations in use of operational and available charging stations may be considered as non-statistical variations. For example, in one embodiment, the time series data can be represented in terms of 50, 75, 100, 125, 150, 175, 200, etc. consecutive intervals. Additionally, the selected number of time intervals may be dynamically selected by the charging station data service 122 based on results of the processing of the time series data (e.g., potential false positive characterization of unavailability), time of day, season, or other external factors (e.g., periods of anticipated high usage). The time intervals can also vary between individual charging stations or sets of charging stations. An illustration of time series data characterizing charging station use as "use" or "non-use" over a set of time intervals is illustrated in FIG. 6.

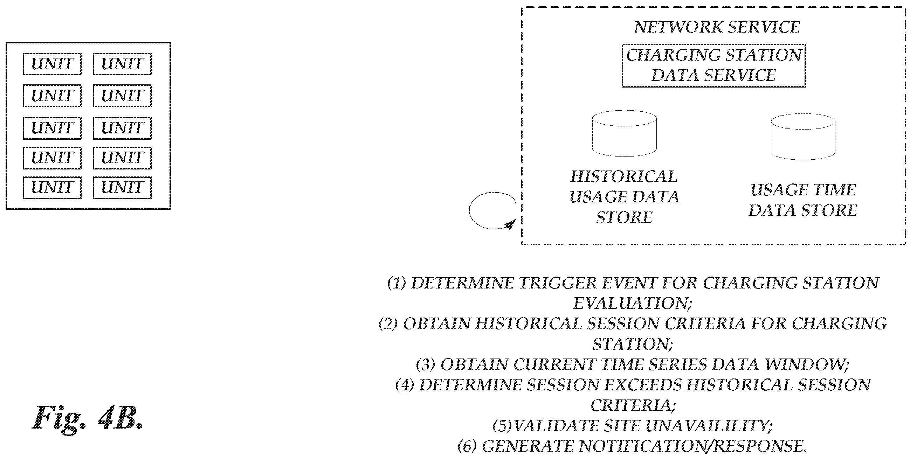

Turning now to FIG. 4B, the charging station data service 122 can then process the time series data to characterize availability of individual charging stations or groups of charging stations, at (1), the charging station data service 122 determines a trigger event for charging station evaluation. The trigger event can correspond to time based criteria, such as based on scheduled times of day or periodicity. The trigger event can also correspond to defined events, such as power consumption metrics for a geographic charging station site, manually generated requests (administrator or vehicle owners), requests received by the charging station data service 122 provider, and the like.

As described above, illustratively, the charging station data service 122 can determine whether any particular instance of sequential non-use corresponds to a statistically significant deviation of established periods of non-use for a charging station. If such a deviation occurs, the consecutive period of non-use can be considered to be indicative of an unavailability of the charging station. The charging station data service 122 can further compare whether other charging stations within a defined geographic charging station site have also experienced such a statistical deviation, which may indictive of a greater source of unavailability on a charging station site basis. Accordingly, at (2), the charging station data service 122 can obtain historical session criteria for the charging station that corresponds to the selection of the statistical deviation amount that will be utilized to evaluation periods of identified non-use. Illustratively, in one aspect, the historical session criteria can include an identification of a fixed number or formula for setting the threshold amount.

In some embodiments, the formula is based on a percentile of the measured inactivity of the charging with the current time window. For example, the percentile can be any percentage value including, but not limited to, 75%, 80%, 85%, 90%, 95%, 99% and any percentage values in between. Additionally, in some embodiments, the formula can also include a multiplier of the percentage value, such as 2x, 3x, 4x, 5x, and the like. By identifying the threshold as a percentile of the current window of time series data, the threshold can be considered to be dynamic in nature to account for variations in use by season, weather, or other events that may create variations in use or non-use of operational charging stations. Additionally, in embodiments where a formula includes a multiplier, the multiplier assists in establishing a threshold that filters out possible positives. The formula can illustratively be modified by adjusting the percentile or the multiplier based on feedback, such as tuning the multiplier based on a number of false negatives (e.g., incorrect characterizations of availability).

At (3), the charging station data service 122 can obtain the current time series data window and identify periods of non-use within the time series data. At (4), the charging station data service 122 can process the time series data to determine whether any identified periods of non-use exceed the threshold (e.g., exceeds the percentile x multiplier threshold). If so, the charging station data service 122 can characterize one or more periods of inactivity as indicative of unavailability of the charging station. If no identified periods of non-use exceed the threshold, the charging station data service 122 can characterize the charging station as operational and available (assuming there are no self-test or diagnostic reports of failure).

At (5), the charging station data service 122 can further validate any characterizations of individual charging station unavailability. In one embodiment, the charging station data service 122 can compare individual characterizations of charging station unavailability relative to other charging stations within a defined charging station site or set of charging station sites. Illustratively, the historical session criteria can also include a definition of charging station site unavailability thresholds as a percentage of characterized unavailable charging stations relative to the total number of charging stations. For example, if the charging station site unavailability threshold is set to 60%, if the percentage of characterized unavailable charging stations relative to the total number of charging stations exceeds the threshold, the charging station data service 122 can characterize the charging station site as having a significant event that may not be limited to an individual charging station or subset of charging stations. For example, a barrier to a geographic charging station site that prevents access to most (if not all) the charging stations could be identified. In other examples, this charging station site-level event may be used to identify or eliminate false positives in scenarios where usage is declining naturally due to external conditions such as increased availability of charging stations in the local region.

At (6), if a charging station is characterized as unavailable and the unavailability characterization is validated, the charging station data service 122 can then generate notifications, and generate instructions for mitigation or correctional actions responsive to the determination and characterization of unavailability of the charging station. For example, the charging station data service 122 can initiate additional or alternative diagnostic systems, vision systems or other detection processes to verify the identified unavailability. In other examples, the charging station data service 122 can schedule or cause to be scheduled in person service calls to diagnose or potentially repair charging stations. In other examples, the charging station data service 122 can generate interfaces or communications that identifying individual or grouped availability information for charging stations.

In some embodiments, the vehicle 130 may provide a user interface to present the availability of the charging station at a specific charging station site. For example, a user of the vehicle, such as a driver, owner, administrator, technician, etc., may access the availability of the characterized charging station by using the user interface. In some embodiments, the vehicle 130 provides the available charging stations and/or routing information based on the charging station availability. In some embodiments, the charging station availability information presented in the vehicle can be automatically updated. In these embodiments, the charging station availability information can be presented as the charging station utilization ratio at a specific charging station site or whether the charging station site is abandoned. For example, if some of the charging stations at a specific charging station are not working, this charging station can be represented as "not abandoned charging station site," and the vehicle may able to use the charging station site. However, if the charging station site is abandoned, the vehicle will be presented with an information that the charging station site is abandoned (e.g., not available).

In some embodiments, the availability of the charging station site can be determined based on third factors, such as waiting for time or utilization ratio of the charging stations within the charging station site. For example, the charging station data service 122 may collect the third factor, such as the number of waiting times at charging station sites. If the waiting time is above a threshold value, the charging station data service 122 may designate these charging station sites as abandoned, and the vehicle may receive the charging station site data as an abandoned charging station data. In these embodiments, the waiting time for each charging station site can be determined based on the positioning system 218 implemented in the vehicle. For example, the vehicle may provide its positioning system 218 via the com 220, and the charging station data service 122 can determine how many cars are within a geofence area of each charging station site.

The above availability of the charging stations and/or charging station site can be updated in real-time or near real-time and provided to the UI of the vehicles.

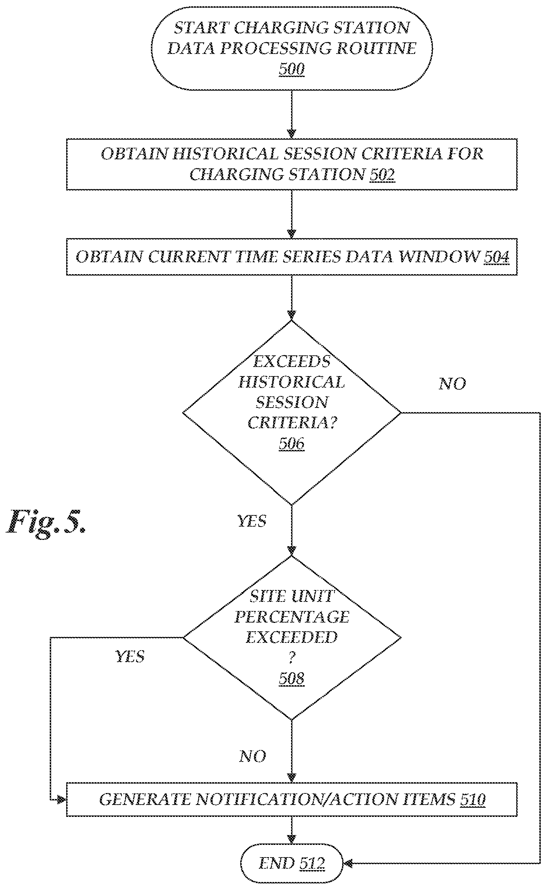

FIG. 5 illustrates a flow diagram of an illustrative process implemented by the charging station data service 122 to process time series data to generate characterizations of unavailability. The processes illustrated in FIG. 5 is illustrative in nature and should not be construed as limiting. In some embodiments, some portion of the illustrative process attributed to the charging station data service 122 to process time series data may be implemented in a distributed manner on one or individual charging stations. In this alternative, individual charging stations may implement the processes to determine, characterize or identify availability information. In certain embodiments, the charging stations may then report potential issues that can be validated by the charging station data service 122 or to elicit a response. In still another variation, a charging station site may implement a peer-to-peer model in which one or more charging stations may be implement the illustrative processes attributed to the network service for purposes of a charging station site by charging station site processing. Routine 500 is illustratively implemented by the charging station data service 122.

At block 502, the charging station data service 122 can obtain historical session criteria for the charging station that corresponds to the selection of the statistical deviation amount that will be utilized to evaluation periods of identified non-use. Illustratively, in one aspect, the historical session criteria can include an identification of a fixed number or formula for setting the threshold amount.

In some embodiments, the formula is based on a percentile of the measured inactivity of the charging with the current time window. For example, the percentile can be any percentage value including, but not limited to, 75%, 80%, 85%, 90%, 95%, 99% and any percentage values in between. Additionally, in some embodiments, the formula can also include a multiplier of the percentage value, such as 2x, 3x, 4x, 5x, and the like. By identifying the threshold as a percentile of the current window of time series data, the threshold can be considered to be dynamic in nature to account for variations in use by season, weather, or other events that may create variations in use or non-use of operational charging stations. Additionally, in embodiments where a formula includes a multiplier, the multiplier assists in establishing a threshold that filters out possible positives. The formula can illustratively be modified by adjusting the percentile or the multiplier based on feedback, such as tuning the multiplier based on a number of false negatives (e.g., incorrect characterizations of availability).
the charging station data service 122 determines a trigger event for charging station evaluation. The trigger event can correspond to time based criteria, such as based on scheduled times of day or periodicity. The trigger event can also correspond to defined events, such as power consumption metrics for a geographic charging station site, manually generated requests (administrator or vehicle owners), requests received by the charging station data service 122 provider, and the like.

In some embodiments, the charging station data service 122 can determine whether any particular instance of sequential non-use corresponds to a statistically significant deviation of established periods of non-use for a charging station. If such a deviation occurs, the consecutive period of non-use can be considered to be indicative of an unavailability of the charging station. The charging station data service 122 can further compare whether other charging stations within a defined geographic charging station site have also experienced such a statistical deviation, which may indictive of a greater source of unavailability on a charging station site basis.

At block 504, the charging station data service 122 can obtain the current time series data window and identify periods of non-use within the time series data. At block 506, the charging station data service 122 can process the time series data to determine whether any identified periods of non-use exceed the threshold (e.g., exceeds the percentile x multiplier threshold). If so, the charging station data service 122 can characterize one or more periods of inactivity as indicative of unavailability of the charging station site at block 508. If no identified periods of non-use exceed the threshold, the charging station data service 122 can characterize the charging station as operational and available (assuming there are no self-test or diagnostic reports of failure), and the routine 500 can be ended at block 512.

At block 508, the charging station data service 122 can further validate any characterizations of individual charging station unavailability by determining whether percentage of unavailable or available charging stations in charging station site. In one embodiment, the charging station data service 122 can compare individual characterizations of charging station unavailability relative to other charging stations within a defined charging station site or set of charging station sites. Illustratively, the historical session criteria can also include a definition of charging station site unavailability thresholds as a percentage of characterized unavailable charging stations relative to the total number of charging stations. For example, if the charging station site unavailability threshold is set to 60%, if the percentage of characterized unavailable charging stations relative to the total number of charging stations exceeds the threshold, the charging station data service 122 can characterize the charging station site as having a significant event that may not be limited to an individual charging station or subset of charging stations. For example, a barrier to a geographic charging station site that prevents access to most (if not all) the charging stations could be identified. In other examples, this charging station site-level event may be used to identify or eliminate false positives in scenarios where usage is declining naturally due to external conditions such as increased availability of charging stations in the local region. If the availability of charging stations in a charging station site exceed a threshold percentage, the routine is ended at block 512. In another example, the charging station data service 122 can further validate any characterizations of individual charging station unavailability by comparing usage data reported by individual vehicles regarding charging usage within a charging station site. In this aspect, the charging station data service can independently validate a number of vehicles that have accessed the charging station site and utilized one or more charging stations. If the availability of charging stations in a charging station site does not exceed a threshold percentage, the routine proceed to block 510.

At block 510, if a charging station is characterized as unavailable and the unavailability characterization is validated, the charging station data service 122 can then generate notifications, and generate instructions for mitigation or correctional actions responsive to the determination and characterization of unavailability of the charging station. For example, the charging station data service 122 can initiate additional or alternative diagnostic systems, vision systems or other detection processes to verify the identified unavailability. In other examples, the charging station data service 122 can schedule or cause to be scheduled in person service calls to diagnose or potentially repair charging stations. In other examples, the charging station data service 122 can generate interfaces or communications that identifying individual or grouped availability information for charging stations.

In some embodiments, the vehicle 130 may provide a user interface to present the availability of the charging station at a specific charging station site. For example, a user of the vehicle, such as a driver, owner, administrator, technician, etc., may access the availability of the characterized charging station by using the user interface. In some embodiments, the vehicle 130 provides the available charging stations and/or routing information based on the charging station availability. In some embodiments, the charging station availability information presented in the vehicle can be automatically updated. In these embodiments, the charging station availability information can be presented as the charging station utilization ratio at a specific charging station site or whether the charging station site is abandoned. For example, if some of the charging stations at a specific charging station are not working, this charging station can be represented as "not abandoned charging station site," and the vehicle may able to use the charging station site. However, if the charging station site is abandoned, the vehicle will be presented with an information that the charging station site is abandoned (e.g., not available).

In some embodiments, the availability of the charging station site can be determined based on third factors, such as waiting for time or utilization ratio of the charging stations within the charging station site. For example, the charging station data service 122 may collect the third factor, such as the number of waiting times at charging station sites. If the waiting time is above a threshold value, the charging station data service 122 may designate these charging station sites as abandoned, and the vehicle may receive the charging station site data as abandoned charging station data. In these embodiments, the waiting time for each charging station site can be determined based on the positioning system 218 implemented in the vehicle. For example, the vehicle may provide its positioning system 218 via the com 220, and the charging station data service 122 can determine how many cars are within a geofence area of each charging station site.

The above availability of the charging stations and/or charging station site can be updated in real-time or near real-time and provided to the UI of the vehicles.

FIG. 6 illustrates an example of time series data characterizing charging station use as "use" or "non-use" over a set of time intervals. Each row of the illustrative time series data represents use data for an individual charging station, such for a site or subset of a site. As will be explained in detailed below, the time series data can identify charging station use and charging station non-use. In some instances, non-use intervals do not exceed established thresholds and are not considered indicative of an unavailability of the charging station. In other instances, as identified in FIG. 6, one non-use interval exceeds an established threshold and may be utilized to characterize the particular charging station as unavailable.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Thus, the present disclosure is limited only by the claims.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "may," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments.

In the foregoing specification, the disclosure has been described with reference to specific embodiments. Accordingly, this description is to be considered as illustrative and is for the purpose of teaching those skilled in the art the manner of making and using various embodiments of the disclosed air vent assembly. It is to be understood that the forms of disclosure herein shown and described are to be taken as representative embodiments. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.

## Claims

1. A system for managing charging stations (112A, 112B, 112C), the system comprising:
one or more computing processors and memories for executing computer-executable instructions to implement a charging station (112A, 112B, 112C) data service, wherein the charging station (112A, 112B, 112C) data service is configured to:
receive charging station (112A, 112B, 112C) usage information from at least one charging station site (110A, 110B, 110C), wherein the charging station site (110A, 110B, 110C) include a plurality of charging stations (112A, 112B, 112C);
determine a trigger event corresponding to the charging station site (110A, 110B, 110C);
in response to determining the trigger event, obtain a historical session criteria for the plurality of charging stations (112A, 112B, 112C) corresponding to the trigger event;
obtain current time series data associated with the plurality of charging stations (112A, 112B, 112C);
identify periods of non-use of at least one charging station (112A, 112B, 112C) of the plurality of charging stations within the current time series data;
in response to determining that the identified periods of non-use of the at least one charging station (112A, 112B, 112C) of the plurality of charging stations (112A, 112B, 112C) within the current time series data exceeds the historical session criteria, characterize one or more periods of non-use as indicative of an unavailable of at least one charging station (112A, 112B, 112C) of the plurality of charging stations (112A, 112B, 112C); and
validate the characterization of the at least one charging station (112A, 112B, 112C) as the unavailable charging station.

2. The system as recited in Claim 1, wherein the charging station (112A, 112B, 112C) data service validates the characterization of the at least one charging station (112A, 112B, 112C) characterized as the unavailable charging station by comparing the characterizations of the unavailable charging station relative to other charging stations (112A, 112B, 112C).

3. The system as recited in Claim 1, wherein the trigger event corresponds to time based criteria, wherein the time based criteria is based at least on scheduled times of day.

4. The system as recited in Claim 1, wherein the trigger event corresponds to defined events, wherein the defined events includes power consumption metrics for a geographic charging station site (110A, 110B, 110C).

5. The system as recited in Claim 1, wherein the charging station (112A, 112B, 112C) data service further configured to determine instances of sequential non-use corresponds to a statistically significant deviation of established periods of non-use for the charging station (112A, 112B, 112C).

6. The system as recited in Claim 1, wherein the current time series data include at least charging station (112A, 112B, 112C) usage information corresponds to a characterization of use of the charging station (112A, 112B, 112C) for a defined period of time.

7. The system as recited in Claim 1, wherein the charging station (112A, 112B, 112C) usage information corresponds to a characterization of a use of the charging station (112A, 112B, 112C) for a defined period of time, wherein the defined period of time corresponds to individual time intervals in the current time series data.

8. The system as recited in Claim 1, wherein the system further comprising generating notification to a vehicle (130) based at least on a result of the characterization of the unavailable charging station.

9. A computer-implemented method for managing charging stations (112A, 112B, 112C), the method comprising:
receiving charging station (112A, 112B, 112C) usage information from at least one charging station site (110A, 110B, 110C), wherein the charging station site (110A, 110B, 110C) include a plurality of charging stations (112A, 112B, 112C) and wherein the charging station (112A, 112B, 112C) usage information corresponds to time series data;
obtaining a historical session criteria for charging stations (112A, 112B, 112C) corresponding to a trigger event;
identifying periods of non-use within the current time series data;
in response to determining that the identified periods of non-use within the current time series data exceeds the historical session criteria, characterizing the periods of non-use as indicative of an unavailable charging station; and
validating the characterization of the unavailable charging station.

10. The computer-implemented method of Claim 9, wherein validating the characterization of the unavailable charging station includes comparing the characterizations of the unavailable charging station relative to other charging stations (112A, 112B, 112C).

11. The computer-implemented method of Claim 9, wherein validating the characterization of the unavailable charging station includes obtaining usage data from at least one vehicle (130), the usage data corresponding to the charging station site (110A, 110B, 110C).

12. The computer-implemented method of Claim 9, wherein the trigger event corresponds to
time based criteria, wherein the time based criteria is based at least on scheduled times of day.

13. The computer-implemented method of Claim 9, wherein the trigger event corresponds to defined evens, wherein the defined events includes power consumption metrics for a geographic charging station site (110A, 110B, 110C).

14. The computer-implemented method of Claim 9, wherein the method further comprising determining instances of sequential non-use corresponds to a statistically significant deviation of established periods of non-use for the charging station (112A, 112B, 112C).

15. The computer-implemented method of Claim 9, wherein the current time series data include at least charging station (112A, 112B, 112C) usage information corresponds to a characterization of use of the charging station (112A, 112B, 112C) for a defined period of time.

## Patentansprüche

1. System zum Verwalten von Ladestationen (112A, 112B, 112C), wobei das System Folgendes umfasst:
einen oder mehrere Rechenprozessoren und Speicher zum Ausführen von computerausführbaren Anweisungen, um einen Datenservice der Ladestation (112A, 112B, 112C) umzusetzen, wobei der Datenservice der Ladestation (112A, 112B, 112C) zu Folgendem konfiguriert ist:
Empfangen von Nutzungsinformationen der Ladestation (112A, 112B, 112C) von mindestens einem Ladestationsstandort (110A, 110B, 110C), wobei der Ladestationsstandort (110A, 110B, 110C) eine Vielzahl von Ladestationen (112A, 112B, 112C) beinhaltet;
Bestimmen eines Auslöseereignisses, das dem Ladestationsstandort (110A, 110B, 110C) entspricht;
als Reaktion auf das Bestimmen des Auslöseereignisses, Erhalten eines historischen Sitzungskriteriums für die Vielzahl von Ladestationen (112A, 112B, 112C), die dem Auslöseereignis entspricht;
Erhalten von aktuellen Zeitfolgedaten, die der Vielzahl von Ladestationen (112A, 112B, 112C) zugeordnet sind;
Identifizieren von Zeiträumen der Nichtnutzung von mindestens einer Ladestation (112A, 112B, 112C) der Vielzahl von Ladestationen innerhalb der aktuellen Zeitfolgedaten;
als Reaktion auf das Bestimmen, dass die identifizierten Zeiträume der Nichtnutzung der mindestens einen Ladestation (112A, 112B, 112C) der Vielzahl von Ladestationen (112A, 112B, 112C) innerhalb der aktuellen Zeitfolgedaten die historischen Sitzungskriterien überschreiten, Kennzeichnen eines oder mehrerer Zeiträume der Nichtnutzung als auf eine nicht verfügbare von mindestens einer Ladestation (112A, 112B, 112C) der Vielzahl von Ladestationen (112A, 112B, 112C) hinweisend; und
Validieren der Kennzeichnung der mindestens einen Ladestation (112A, 112B, 112C) als die nicht verfügbare Ladestation.

2. System nach Anspruch 1, wobei der Datenservice der Ladestation (112A, 112B, 112C) die Kennzeichnung der mindestens einen Ladestation (112A, 112B, 112C), die als die nicht verfügbare Ladestation **gekennzeichnet ist, durch** Vergleichen der Kennzeichnungen der nicht verfügbaren Ladestation mit anderen Ladestationen (112A, 112B, 112C) validiert.

3. System nach Anspruch 1, wobei das Auslöseereignis zeitbasierten Kriterien entspricht, wobei die zeitbasierten Kriterien zumindest auf geplanten Tageszeiten basieren.

4. System nach Anspruch 1, wobei das Auslöseereignis definierten Ereignissen entspricht, wobei die definierten Ereignisse Leistungsverbrauchsmetriken für einen geografischen Ladestationsstandort (110A, 110B, 110C) beinhalten.

5. System nach Anspruch 1, wobei der Datenservice der Ladestation (112A, 112B, 112C), der ferner dazu konfiguriert ist, Fälle von aufeinanderfolgenden Nichtnutzungen zu bestimmen, einer statistisch signifikanten Abweichung von hergestellten Zeiträumen der Nichtnutzung für die Ladestation (112A, 112B, 112C) entspricht.

6. System nach Anspruch 1, wobei die aktuellen Zeitfolgedaten, die zumindest Nutzungsinformationen der Ladestation (112A, 112B, 112C) beinhalten, einer Kennzeichnung der Nutzung der Ladestation (112A, 112B, 112C) für einen definierten Zeitraum entsprechen.

7. System nach Anspruch 1, wobei die Nutzungsinformationen der Ladestation (112A, 112B, 112C) einer Kennzeichnung einer Nutzung der Ladestation (112A, 112B, 112C) für einen definierten Zeitraum entsprechen, wobei der definierte Zeitraum einzelnen Zeitintervallen in den aktuellen Zeitfolgedaten entspricht.

8. System nach Anspruch 1, wobei das System ferner Erzeugen einer Benachrichtigung für ein Fahrzeug (130) zumindest basierend auf einem Ergebnis der Kennzeichnung der nicht verfügbaren Ladestation umfasst.

9. Computerimplementiertes Verfahren zum Verwalten von Ladestationen (112A, 112B, 112C), wobei das Verfahren Folgendes umfasst:
Empfangen von Nutzungsinformationen der Ladestation (112A, 112B, 112C) von mindestens einem Ladestationsstandort (110A, 110B, 110C), wobei der Ladestationsstandort (110A, 110B, 110C) eine Vielzahl von Ladestationen (112A, 112B, 112C) beinhaltet und wobei die Nutzungsinformationen der Ladestation (112A, 112B, 112C) Zeitfolgedaten entsprechen;
Erhalten von historischen Sitzungskriterien für Ladestationen (112A, 112B, 112C), die einem Auslöseereignis entsprechen;
Identifizieren von Zeiträumen der Nichtnutzung innerhalb der aktuellen Zeitfolgedaten;
als Reaktion auf das Bestimmen, dass die identifizierten Zeiträume der Nichtnutzung innerhalb der aktuellen Zeitfolgedaten die historischen Sitzungskriterien überschreiten, Kennzeichnen der Zeiträume der Nichtnutzung als auf eine nicht verfügbare Ladestation hinweisend; und
Validieren der Kennzeichnung der nicht verfügbaren Ladestation.

10. Computerimplementiertes Verfahren nach Anspruch 9, wobei das Validieren der Kennzeichnung der nicht verfügbaren Ladestation Vergleichen der Kennzeichnungen der nicht verfügbaren Ladestation mit anderen Ladestationen (112A, 112B, 112C) beinhaltet.

11. Computerimplementiertes Verfahren nach Anspruch 9, wobei das Validieren der Kennzeichnung der nicht verfügbaren Ladestation Erhalten von Nutzungsdaten von mindestens einem Fahrzeug (130) beinhaltet, wobei die Nutzungsdaten dem Ladestationsstandort (110A, 110B, 110C) entsprechen.

12. Computerimplementiertes Verfahren nach Anspruch 9, wobei das Auslöseereignis zeitbasierten Kriterien entspricht, wobei die zeitbasierten Kriterien zumindest auf geplanten Tageszeiten basieren.

13. Computerimplementiertes Verfahren nach Anspruch 9, wobei das Auslöseereignis definierten Ereignissen entspricht, wobei die definierten Ereignisse Leistungsverbrauchsmetriken für einen geografischen Ladestationsstandort (110A, 110B, 110C) beinhalten.

14. Computerimplementiertes Verfahren nach Anspruch 9, wobei das Verfahren ferner Bestimmen von Fällen von aufeinanderfolgenden Nichtnutzungen umfasst, die einer statistisch signifikanten Abweichung von hergestellten Zeiträumen der Nichtnutzung für die Ladestation (112A, 112B, 112C) entsprechen.

15. Computerimplementiertes Verfahren nach Anspruch 9, wobei die aktuellen Zeitfolgedaten, die zumindest Nutzungsinformationen der Ladestation (112A, 112B, 112C) beinhalten, einer Kennzeichnung der Nutzung der Ladestation (112A, 112B, 112C) für einen definierten Zeitraum entsprechen.

## Revendications

1. Système de gestion de stations de charge (112A, 112B, 112C), le système comprenant :
un ou plusieurs processeurs et mémoires de calcul pour exécuter des instructions exécutables par ordinateur afin de mettre en œuvre un service de données de station de charge (112A, 112B, 112C), dans lequel le service de données de station de charge (112A, 112B, 112C) est configuré pour :
recevoir des informations sur l'utilisation des stations de charge (112A, 112B, 112C) à partir d'au moins un site de station de charge (110A, 110B, 110C), dans lequel le site de station de charge (110A, 110B, 110C) comprend une pluralité de stations de charge (112A, 112B, 112C) ;
déterminer un événement déclencheur correspondant au site de station de charge (110A, 110B, 110C) ;
en réponse à la détermination de l'événement déclencheur, obtenir un critère de session historique pour la pluralité de stations de charge (112A, 112B, 112C) correspondant à l'événement déclencheur ;
obtenir des données de série temporelle actuelle associées à la pluralité de stations de charge (112A, 112B, 112C) ;
identifier des périodes de non-utilisation d'au moins une station de charge (112A, 112B, 112C) parmi la pluralité de stations de charge dans les données de série temporelle actuelle ;
en réponse à la détermination que les périodes de non-utilisation identifiées de l'au moins une station de charge (112A, 112B, 112C) parmi la pluralité de stations de charge (112A, 112B, 112C) dans les données de série temporelle actuelle dépassent le critère de session historique, caractériser une ou plusieurs périodes de non-utilisation comme indiquant l'indisponibilité d'au moins une station de charge (112A, 112B, 112C) parmi la pluralité de stations de charge (112A, 112B, 112C) ; et
valider la caractérisation de l'au moins une station de charge (112A, 112B, 112C) comme station de charge indisponible.

2. Système selon la revendication 1, dans lequel le service de données de station de charge (112A, 112B, 112C) valide la caractérisation de l'au moins une station de charge (112A, 112B, 112C) caractérisée comme la station de charge indisponible en comparant les caractérisations de la station de charge indisponible par rapport à d'autres stations de charge (112A, 112B, 112C).

3. Système selon la revendication 1, dans lequel l'événement déclencheur correspond à des critères temporels, dans lequel les critères temporels sont basés au moins sur des heures programmées de la journée.

4. Système selon la revendication 1, dans lequel l'événement déclencheur correspond à des événements définis, dans lequel les événements définis comprennent des mesures de consommation d'énergie pour un site de station de charge géographique (110A, 110B, 110C).

5. Système selon la revendication 1, dans lequel le service de données de station de charge (112A, 112B, 112C) configuré en outre pour déterminer les cas de non-utilisation séquentielle correspond à un écart statistiquement significatif des périodes de non-utilisation établies pour la station de charge (112A, 112B, 112C).

6. Système selon la revendication 1, dans lequel les données de série temporelle actuelle comprennent au moins des informations d'utilisation de station de charge (112A, 112B, 112C) correspondent à une caractérisation d'utilisation de la station de charge (112A, 112B, 112C) pour une période de temps définie.

7. Système selon la revendication 1, dans lequel les informations d'utilisation de la station de charge (112A, 112B, 112C) correspondent à une caractérisation d'une utilisation de la station de charge (112A, 112B, 112C) pendant une période de temps définie, dans lequel la période de temps définie correspond à des intervalles de temps individuels dans les données de série temporelle actuelle.

8. Système selon la revendication 1, dans lequel le système comprend en outre la génération d'une notification à un véhicule (130) basée au moins sur un résultat de la caractérisation de la station de charge indisponible.

9. Procédé mis en œuvre par ordinateur de gestion de stations de charge (112A, 112B, 112C), le procédé comprenant :
la réception d'informations d'utilisation de station de charge (112A, 112B, 112C) provenant d'au moins un site de station de charge (110A, 110B, 110C), dans lequel le site de station de charge (110A, 110B, 110C) comprend une pluralité de stations de charge (112A, 112B, 112C) et dans lequel les informations d'utilisation de station de charge (112A, 112B, 112C) correspondent à des données de série temporelle ;
l'obtention d'un critère de session historique pour les stations de charge (112A, 112B, 112C) correspondant à un événement déclencheur ;
l'identification des périodes de non-utilisation dans les données de série temporelle actuelle ;
en réponse à la détermination que les périodes de non-utilisation identifiées dans les données de série temporelle actuelle dépassent le critère de session historique, la caractérisation des périodes de non-utilisation comme indicatives d'une station de charge indisponible ; et
la validation de la caractérisation de la station de charge indisponible.

10. Procédé mis en œuvre par ordinateur selon la revendication 9, dans lequel la validation de la caractérisation de la station de charge indisponible comprend la comparaison des caractérisations de la station de charge indisponible par rapport à d'autres stations de charge (112A, 112B, 112C).

11. Procédé mis en œuvre par ordinateur selon la revendication 9, dans lequel la validation de la caractérisation de la station de charge indisponible comprend l'obtention de données d'utilisation d'au moins un véhicule (130), les données d'utilisation correspondant au site de la station de charge (110A, 110B, 110C).

12. Procédé mis en œuvre par ordinateur selon la revendication 9, dans lequel l'événement déclencheur correspond à des critères temporels, dans lequel les critères temporels sont basés au moins sur des heures programmées de la journée.

13. Procédé mis en œuvre par ordinateur selon la revendication 9, dans lequel l'événement déclencheur correspond à des événements définis, dans lequel les événements définis comprennent des mesures de consommation d'énergie pour un site de station de charge géographique (110A, 110B, 110C).

14. Procédé mis en œuvre par ordinateur selon la revendication 9, dans lequel le procédé comprenant en outre la détermination des cas de non-utilisation séquentielle correspond à un écart statistiquement significatif des périodes de non-utilisation établies pour la station de charge (112A, 112B, 112C).

15. Procédé mis en œuvre par ordinateur selon la revendication 9, dans lequel les données de série temporelle actuelle comprennent au moins des informations d'utilisation de station de charge (112A, 112B, 112C) correspondent à une caractérisation d'utilisation de la station de charge (112A, 112B, 112C) pour une période de temps définie.
